**Europäisches Patentamt**

**European Patent Office**

**Office européen des brevets**

(19)

(11) Numéro de publication: **0 218 052**
A1

## (12) DEMANDE DE BREVET EUROPEEN

(21) Numéro de dépôt: **86111357.9**

(22) Date de dépôt: **16.08.86**

(51) Int. Cl.⁴: **H 01 S 3/03**

(30) Priorité: **29.08.85 FR 8512989**

(43) Date de publication de la demande: **15.04.87**
**Bulletin 87/16**

(84) Etats contractants désignés: **CH DE GB LI NL**

(71) Demandeur: **ASULAB S.A., Faubourg du Lac 6,
CH-2501 Bienne (CH)**

(72) Inventeur: **Steffen, Jürg, Dorf, CH-3655 Sigriswil (CH)**

(74) Mandataire: **de Montmollin, Henri et al, ICB Ingénieurs
Conseils en Brevets SA Faubourg du Lac 6,
CH-2501 Bienne (CH)**

(54) **Tube à décharge gazeuse.**

(57) L'invention concerne un tube à décharge gazeuse comprenant des éléments (1a, 1b) en forme générale de disques ayant une ouverture centrale (3) et séparés par des joints d'étanchéité (9).

Les joints (9) comportent, chacun, un noyau (10) en matériau étanche aux gaz, électriquement isolant et résistant à la compression et aux températures élevées, et deux couches métalliques (15, 16) disposées chacune entre ce noyau (10) et l'un des éléments (1a, 1b) séparés par ce joint (9).

Cas 429

HM/gl

## Tube à décharge gazeuse

La présente invention a pour objet un tube à décharge gazeuse du genre comprenant un premier et un deuxième élément comportant chacun une ouverture centrale et une première et une deuxième face sensiblement perpendiculaires à l'axe de ladite ouverture centrale, lesdits éléments étant disposés de manière que la première face du premier élément soit située en regard de la deuxième face du deuxième élément et que lesdites ouvertures centrales soient coaxiales et constituent, ensemble, au moins une partie d'une cavité destinée à contenir un gaz, ledit tube comportant en outre un joint disposé autour de ladite cavité entre ladite première face du premier élément et la deuxième face du deuxième élément pour assurer l'étanchéité de ladite cavité et des moyens pour serrer ledit joint entre ledit premier élément et ledit deuxième élément.

L'invention va être décrite en prenant comme exemple non limitatif un tube délimitant la cavité de décharge d'un laser à gaz comme celui qui est décrit par la demande de brevet EP-A-0048690.

Le tube décrit dans la demande de brevet EP-A-0048690 comporte des éléments métalliques, en un alliage d'aluminium par exemple, ayant la forme générale de disques munis d'ailettes de refroidissement et percés en leur centre d'une ouverture. Ces éléments sont empilés de manière que leurs ouvertures centrales soient alignées et forment la cavité de décharge du laser. Cette cavité est destinée à être remplie d'un gaz, par exemple de l'argon, sous une faible pression.

Des éléments terminaux comportant l'un une cathode et l'autre une anode sont disposés chacun à une extrémité du tube. Cette anode et cette cathode sont destinées à créer et entretenir une décharge électrique dans le gaz remplissant la cavité.

Les éléments terminaux du tube sont fixés à une enveloppe extérieure de celui-ci de manière à pouvoir comprimer les uns contre les autres les éléments de ce tube et donc à pouvoir comprimer des joints d'étanchéité toriques situés entre ces éléments et réalisés en caoutchouc ou en une matière plastique.

Pendant le fonctionnement du laser, les divers éléments du tube sont portés à des potentiels différents, et la paroi de la cavité est soumise à un bombardement ionique intense de la part du plasma formé par le gaz qui remplit cette cavité. Ces éléments du tube doivent donc être protégés contre l'érosion produite par ce bombardement ionique et être électriquement isolés les uns des autres. Cette protection et cette isolation sont assurées par une couche isolante, de préférence en oxyde d'aluminium, qui recouvre entièrement ces éléments.

La chaleur dégagée pendant le fonctionnement du laser par la décharge électrique entretenue dans le gaz remplissant la cavité est évacuée par un fluide, qui peut être de l'eau, circulant dans l'espace situé entre les ailettes des éléments et l'enveloppe extérieure du tube.

Le tube à décharge gazeuse décrit ci-dessus présente certains inconvénients.

Ainsi, l'élévation de la température des éléments du tube pendant le fonctionnement du laser provoque la dilatation de ces éléments. Comme le coefficient de dilatation du matériau des éléments est différent de celui de la couche isolante qui les recouvre, cette dilatation provoque l'apparition de fissures dans cette couche isolante. La présence de ces fissures permet au liquide de refroidissement du tube de pénétrer dans la cavité, ce qui empêche le fonctionnement correct du laser.

En outre, à la mise en service du laser, ou après une interruption prolongée de son fonctionnement, la cavité doit être vidée aussi complètement que possible de l'air ou du gaz qu'elle contient avant d'être remplie, ou remplie à nouveau, par le gaz voulu. De manière bien connue, cette mise sous vide est facilitée et améliorée par un chauffage simultané du tube.

Cependant, la présence des joints en caoutchouc ou en matière plastique situés entre les éléments empêche de chauffer le tube à une température aussi élevée que cela serait souhaitable. En outre, ces joints retiennent à leur surface une quantité non négligeable d'air ou de gaz dont la présence augmente notablement la durée de cette mise sous vide.

De même, ces joints peuvent être détruits par le bombardement ionique venant du plasma formé dans la cavité pendant le fonctionnement du laser. Les éléments du tube doivent donc être munis de nervures et de rainures disposées de manière à protéger ces joints contre ce bombardement. Ces nervures et ces rainures compliquent la fabrication de ces éléments et augmentent leur prix.

Pour éviter ces inconvénients, il serait possible de remplacer ces joints en caoutchouc ou en matière plastique par des joints en métal, par exemple en cuivre ou en aluminium, tels que ceux qui sont couramment utilisés dans les dispositifs comportant une enceinte étanche devant supporter une différence de pressions et/ou une température élevées.

L'utilisation de tels joints permettrait de chauffer le tube à une température élevée pendant la mise sous vide de la cavité. En outre, elle permettrait de résoudre le problème d'étanchéité posé par la présence de fissures dans la couche isolante recouvrant les éléments du tube. En effet, le métal de ces joints est suffisamment mou pour qu'il pénètre dans ces fissures et les bouche complètement lorsque ces joints sont serrés avec force entre deux éléments du tube.

D'autre part, ces joints métalliques sont moins sensibles au bombardement ionique provenant du plasma pendant le fonctionnement du laser.

Cependant, lorsque de tels joints métalliques sont serrés entre deux éléments du tube et qu'ils pénètrent dans les fissures de la couche d'isolation de ces éléments, ils viennent en contact avec le métal non protégé, au fond de ces fissures, et provoquent un court-circuit entre les éléments, ce qui empêche le fonctionnement du laser.

D'autre part, les moyens de serrage tels que ceux qui sont décrits dans la demande de brevet EP-A-0048690 mentionnée ci-dessus doivent être dimensionnés de manière à exercer sur le tube la somme des forces qui doivent être appliquées chacune à l'un des joints pour que ceux-ci assurent l'étanchéité du tube. Chacune de ces forces est beaucoup plus importante lorsque le joint est métallique que lorsqu'il est en caoutchouc ou en plastique.

Si ces joints sont métalliques, et si le nombre d'éléments du tube est relativement grand, la force totale qui doit être exercée par les moyens de serrage devient très importante. Dans un tel cas, des moyens de serrage tels que ceux qui sont décrits dans la demande de brevet EP-A-0048690 ne peuvent pratiquement plus être utilisés car leurs dimensions deviennent beaucoup trop grandes.

Un but de la présente invention est de proposer un tube du genre défini ci-dessus comportant des joints d'étanchéité qui présentent tous les avantages des joints métalliques connus, mais qui ne provoquent aucun risque de court-circuit entre les divers éléments du tube.

Un autre but de l'invention est de proposer un tube de ce genre qui peut être composé d'un nombre quelconque d'éléments sans que la force que doivent exercer les moyens de serrage pour que les joints assurent une bonne étanchéité du tube ne devienne trop importante.

Ces buts sont atteints par le tube revendiqué.

L'invention va être décrite à l'aide du dessin dans lequel:

- la figure 1 est une vue en plan de l'un des éléments du tube selon l'invention;

- la figure 2 est une coupe à travers deux éléments adjacents de ce tube selon la ligne de coupe A-A de la figure 1;

- la figure 3 est une coupe d'un joint d'étanchéité disposé entre les éléments de la figure 2; et

- la figure 4 est une vue en coupe montrant un détail d'une autre forme d'exécution du tube selon l'invention.

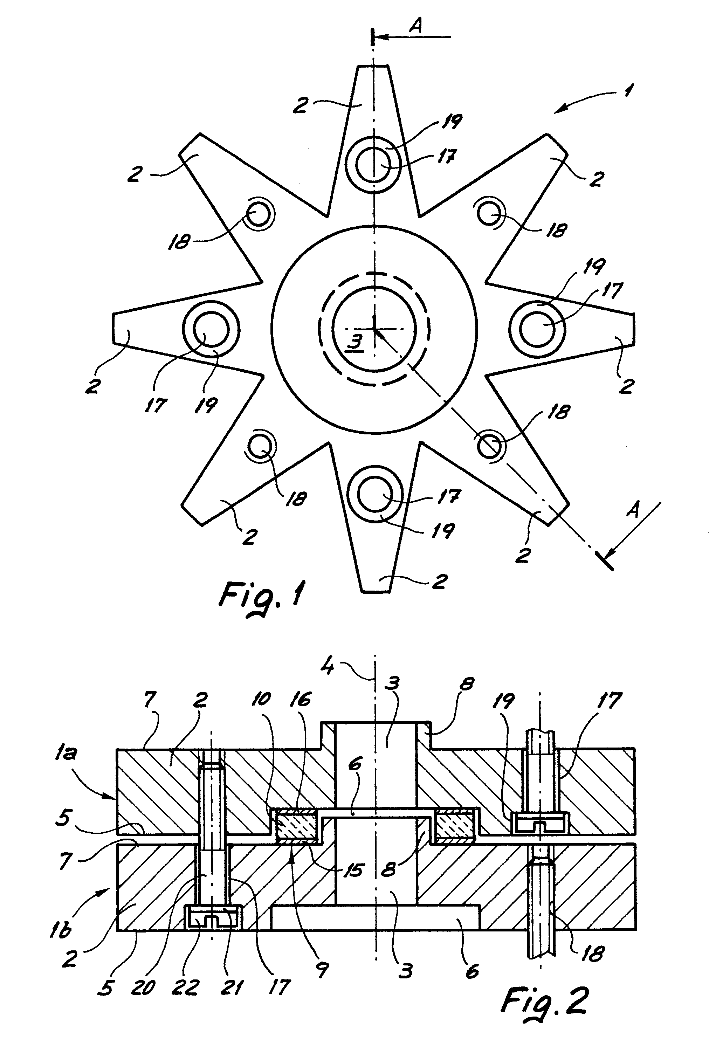

Comme le tube décrit dans la demande de brevet EP-A-0048690, le tube de la présente invention comporte un empilement d'éléments identiques les uns aux autres. Ces éléments seront désignés, en général, par la référence 1, les deux éléments représentés à la figure 2 étant respectivement désignés par les références 1a et 1b.

Comme ceux qui sont décrits dans la demande de brevet EP-A-0048690, ces éléments 1a et 1b ont la forme générale d'un disque métallique muni d'ailettes de refroidissement 2 et percé d'une ouverture cylindrique centrale 3 ayant un axe 4. L'ensemble des ouvertures 3 de tous les éléments 1 du tube forme la cavité de décharge d'un laser.

Les éléments 1 sont réalisés, de préférence, en un alliage d'aluminium, et recouverts sur toute leur surface d'une couche isolante en alumine qui n'a pas été représentée à cause de sa très faible épaisseur.

Une de leurs faces, désignée par la référence 5, comporte un logement cylindrique 6 coaxial à l'ouverture 3.

Leur autre face, désignée par la référence 7, comporte une protubérance cylindrique 8, également coaxiale à l'ouverture 3, et dont le diamètre est inférieur à celui du logement 6.

Un joint d'étanchéité 9 en forme d'anneau est disposé dans le logement 6 de l'élément 1a, et la protubérance 8 de l'élément 1b adjacent est engagée dans l'ouverture centrale de ce joint 9.

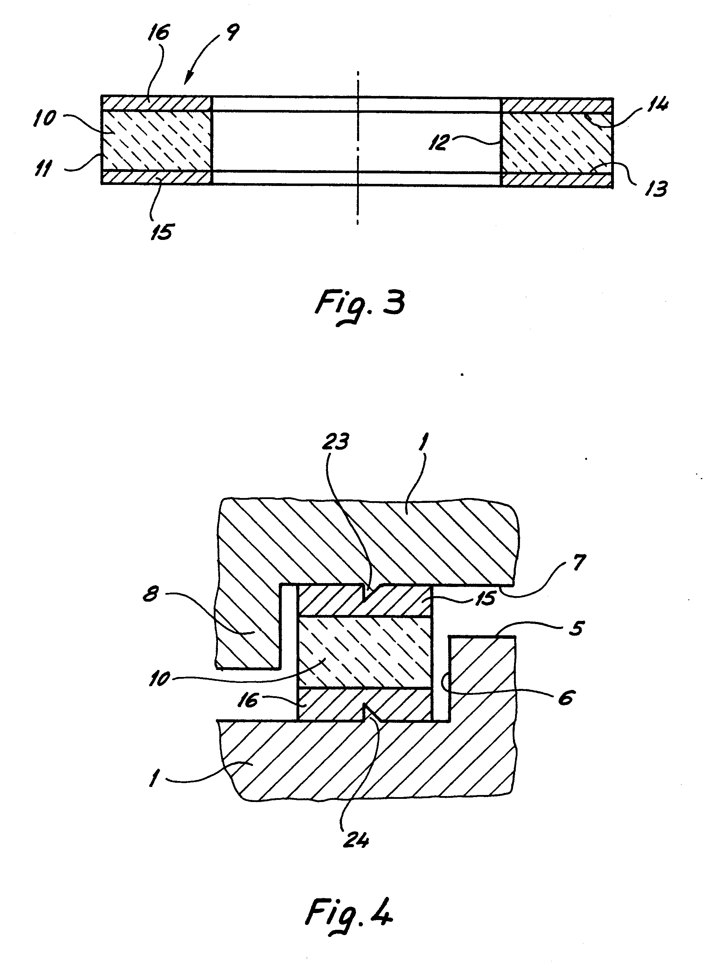

Ce joint 9 est représenté en détail à la figure 3. Il comporte un noyau 10 en forme d'anneau, délimité par une surface cylindrique extérieure 11 dont le diamètre est inférieur au diamètre du logement 6, par une surface cylindrique intérieure 12 coaxiale à la surface cylindrique extérieure 11 et dont le diamètre est supérieur à celui de la protubérance 8, et par deux surfaces 13 et 14 sensiblement planes et perpendiculaires à l'axe des surfaces cylindriques 11 et 12.

L'épaisseur totale du joint 9 est supérieure à la profondeur du logement 6 dans lequel il est placé et également supérieure à la hauteur de la protubérance 8 qu'il entoure, et cela même lorsque ce joint 9 est serré, d'une manière qui sera décrite plus loin, entre les deux éléments 1a et 1b. Ces deux éléments 1a et 1b ne peuvent donc pas venir en contact direct l'un avec l'autre.

Le noyau 10 du joint 9 est réalisé en un matériau imperméable aux gaz, résistant à la compression et aux températures élevées, et électriquement isolant. Ce matériau peut être avantageusement mais pas exclusivement de la céramique.

Chacune des faces planes 13 et 14 du noyau 10 est recouverte d'une couche métallique 15, respectivement 16. Ces couches 15 et 16 sont faites d'un métal mou qui peut être avantageusement mais pas exclusivement du cuivre ou de l'aluminium. Elles sont disposées sur le noyau 10 de manière à n'avoir aucun contact électrique l'une avec l'autre.

L'épaisseur du noyau 10 et de chacune des couches 15 et 16 est choisie de manière que la somme de l'épaisseur de ce noyau 10 et de l'une de ces couches 15 ou 16 soit supérieure à la profondeur du logement 6 et à la hauteur de la protubérance 8, même lorsque le joint 9 est serré entre les deux éléments 1a et 1b qu'il sépare.

Même si le joint 9 n'est pas parfaitement concentrique à l'ouverture 3 et touche la paroi latérale du logement 6 ou de la protubérance 8, les couches 15 et 16 ne peuvent donc pas venir en contact avec la face 5 de l'élément 1a et, respectivement, avec la face 7 de l'élément 1b. Ces éléments 1a et 1b ne peuvent donc pas être reliés électriquement par l'intermédiaire de ces couches 15 et 16.

Les couches métalliques 15 et 16 peuvent être reliées au noyau 10 de manière indémontable et ne former qu'une pièce avec lui.

Dans ce cas, ces couches 15 et 16 peuvent être réalisées, par exemple, en déposant tout d'abord sur chacune des faces 13 et 14 du noyau 10 une couche fine du métal choisi à l'aide d'un procédé bien connu de dépôt en phase vapeur par voie chimique ou physique. Ces procédés sont généralement désignés par les initiales de leurs noms anglais CVD (Chemical Vapour Deposition) ou PVD (Physical Vapour Deposition).

L'épaisseur des couches métalliques est ensuite augmentée jusqu'à la valeur désirée en utilisant un procédé, également bien connu, de dépôt galvanique.

Des couches 15 et 16 ne formant qu'une pièce avec le noyau 10 peuvent également être réalisées, toujours par exemple, en collant sur les faces 13 et 14 des rondelles préalablement découpées dans une feuille du métal désiré ayant l'épaisseur voulue.

Les couches 15 et 16 peuvent également être reliées de manière indémontable au noyau 10 et donc ne pas former une seule pièce avec lui. Dans ce cas, ces couches 15 et 16 peuvent être réalisées sous la forme de rondelles semblables aux rondelles ci-dessus qui sont simplement juxtaposées au noyau 10 au moment du montage du tube.

Dans le joint 9 tel qu'il est représenté à la figure 3, la largeur des couches 15 et 16 est égale à la largeur du noyau 10. Cette égalité n'est pas obligatoire, et ces couches 15 et 16 peuvent également être moins larges que le noyau 10.

Il est facile de voir que le fait que le noyau 10 est réalisé en un matériau isolant ainsi que les relations mentionnées ci-dessus entre les différentes dimensions du noyau 10, des couches métalliques 15 et 16, du logement 6 et de la protubérance 8, garantissent qu'aucun contact électrique direct entre deux éléments 1 adjacents ne peut avoir lieu.

La présence des couches métalliques 15 et 16 n'a donc pas pour effet de créer un risque de court-circuit entre les éléments 1.

Le matériau du noyau 10 étant résistant à la compression, toute la force exercée sur le joint 9 au montage du tube, d'une manière qui sera décrite plus loin, est disponible pour provoquer la déformation des couches 15 et 16 qui est nécessaire pour que ces dernières épousent étroitement toutes les irrégularités des faces 5 ou 7 avec lesquelles elles sont en contact et pénètrent dans les fissures de la couche isolante recouvrant les éléments 1, ce qui assure une bonne étanchéité du tube.

Cette étanchéité est par ailleurs également assurée par le fait que le matériau du noyau 10 est imperméable aux gaz.

En outre, le joint 9 tel qu'il vient d'être décrit supporte la température élevée à laquelle il est souhaitable de porter le tube pendant la mise sous vide de la cavité.

De plus, il supporte mieux le bombardement ionique produit par le plasma situé dans la cavité lorsque le laser fonctionne que les joints connus en caoutchouc ou en matière plastique. Les éléments 1 du tube ne doivent donc pas comporter de moyens de protection de ces joints, ce qui simplifie leur fabrication et diminue leur prix. Il faut d'ailleurs noter que les protubérances 8 protègent déjà, au moins partiellement, les joints 9 contre ce bombardement ionique.

Le montage du tube peut être réalisé en disposant côte à côte le nombre voulu d'éléments 1 séparés les uns des autres par des joints 9, la face 5 de chaque élément étant disposée en regard de la face 7 de l'élément adjacent. Les divers éléments 1 sont alignés, au moins approximativement, par l'intermédiaire des joints 9 qui s'engagent, d'une part, autour des protubérances 8 et, d'autre part, dans les logements 6. L'ensemble ainsi obtenu peut ensuite être serré entre deux éléments terminaux à l'aide de moyens de serrage analogues à ceux qui sont décrits dans la demande EP-A-0048690 déjà mentionnée, ces moyens de serrage assurant en outre l'alignement exact des éléments 1. L'alignement des éléments 1 peut aussi être obtenu en donnant aux joints 9 des diamètres extérieur et intérieur égaux, respectivement, au diamètre des logements 6 et au diamètre des protubérances 8.

Dans un tel cas, les parties des éléments 1a et 1b et les composants portant les références 17 à 22 dans les figures 1 et 2 et qui n'ont pas encore été décrits ne sont pas nécessaires et ne sont donc pas prévus.

Cependant, il est nécessaire d'appliquer une force assez importante entre deux éléments adjacents pour que les couches 15 et 16 du joint 9 qui les sépare se déforment de manière à épouser étroitement les irrégularités des faces 5 et, respectivement, 7 de ces éléments et à pénétrer dans les fissures de la couche d'isolation qui les recouvre. Cette déformation est nécessaire pour que l'étanchéité du tube soit garantie.

Si le tube comporte un nombre relativement grand d'éléments, la force qui doit être exercée sur l'ensemble de ces éléments 1 pour obtenir cette déformation devient très importante.

Des moyens de serrage tels que ceux qui sont décrits dans la demande EP-A 0048690 ne peuvent pratiquement pas être utilisés dans un tel cas, car ils doivent être alors très volumineux pour pouvoir exercer cette force, et ils sont donc encombrants et difficiles à réaliser.

Dans un tel cas, les éléments 1 peuvent être conformés de manière que les moyens de serrage comportent plusieurs parties et que chaque partie ne doive exercer une force que sur un plus petit nombre de joints 9. Ces moyens de serrage sont alors moins encombrants et plus faciles à réaliser.

Dans l'exemple représenté aux figures 1 et 2, les éléments 1a et 1b sont conformés de manière que chaque joint 9 soit serré individuellement.

Dans cet exemple, chacun des éléments 1a et 1b du tube comporte un nombre égal de trous lisses cylindriques 17 et de trous filetés 18 dont les axes sont parallèles à l'axe 4 de l'ouverture 3 et équidistants de ce dernier. En outre, ces trous 17 et 18 sont répartis régulièrement et alternativement autour de l'axe 4.

Un logement cylindrique 19 est en outre ménagé dans la face 5 autour de chaque trou lisse 17.

Dans cet exemple, le montage du tube se fait de la manière suivante:

Un premier élément 1 est fixé, d'une manière non représentée, à une première pièce terminale, également non représentée. Cette pièce terminale peut être, par exemple, celle qui contient l'anode ou la cathode du tube. Si cette pièce terminale était représentée, elle serait située dans la partie supérieure de la figure 2.

Ce premier élément 1 est fixé à cette première pièce terminale de manière que sa face 5 soit entièrement accessible.

Un premier joint 9 est alors disposé dans le logement 6 de cette face 5, un deuxième élément 1 est ensuite disposé en regard du premier, de manière que sa face 7 soit en contact avec le premier joint 9, et que ses trous lisses 17 soient coaxiaux avec les trous filetés 18 du premier élément 1.

Ce deuxième élément 1 est alors fixé au premier par des vis 20. Les dimensions de ces vis 20 sont choisies de manière qu'elles traversent les trous lisses 17 du deuxième élément 1 sans toucher les parois de ceux-ci, et qu'elles se vissent dans les trous filetés 18 du premier élément 1. Le cas échéant, une douille en matériau isolant, non représentée, peut être glissée sur la partie de la vis 20 qui se trouve dans le trou lisse 17 pour garantir l'isolation de cette partie par rapport à la paroi de ce trou 17.

Avant la mise en place de ces vis 20, une rondelle isolante 21 est disposée sous leur tête 22. Le diamètre de cette tête 22 est en outre choisi de manière que celle-ci ne touche pas la paroi cylindrique du logement 19 dans lequel elle est engagée.

Les vis 20, qui sont bien entendu en contact électrique avec le premier élément 1, sont donc par contre électriquement isolées du deuxième élément 1. Ces deux éléments 1 sont donc électriquement isolés l'un de l'autre malgré la présence des vis 20 qui les relient.

Les deux premiers éléments 1 sont serrés l'un contre l'autre par les vis 20 avec une force telle que les couches métalliques 15 et 16 du joint 9 qui les sépare se déforment légèrement et épousent étroitement toutes les irrégularités éventuelles de faces 5 et, respectivement, 7 avec lesquelles elles sont en contact, et pénètrent dans toutes les fissures éventuelles de la couche isolante qui recouvre ces éléments.

Un deuxième joint 9 est ensuite disposé dans le logement 6 du deuxième élément 1. Un troisième élément 1 est alors placé contre ce deuxième joint 9 de manière que sa face 7 soit tournée vers la face 5 du deuxième élément 1, et que ses trous lisses 17 soient coaxiaux avec les trous filetés 18 de ce deuxième élément 1.

Ce troisième élément 1 est fixé au deuxième également à l'aide de vis 20 passant dans ses trous lisses 17 et se vissant dans les trous filetés 18 du deuxième élément 1.

Les autres éléments 1 sont ensuite fixés de la même manière, les uns après les autres, jusqu'à ce que le nombre d'éléments 1 requis soit atteint.

La deuxième pièce terminale du tube, qui serait disposée au bas de la figure 2 si elle avait été représentée, est alors fixée au dernier élément 1 et le montage du tube est terminé.

Il peut arriver que les fissures de la couche isolante qui recouvre les éléments du tube soient trop nombreuses ou trop profondes pour que les couches métalliques des joints décrits ci-dessus puissent les boucher complètement. Dans un tel cas, l'étanchéité du tube n'est donc pas absolue.

Un moyen simple de résoudre ce problème consiste à supprimer cette couche isolante dans les zones des surfaces latérales 5 et 7 des éléments 1 du tube devant entrer en contact avec les joints 9. Les couches métalliques 15 et 16 de ces joints 9 sont alors directement en contact avec le métal des éléments 1, qui ne présente pas de fissure. Ce contact direct ne provoque bien entendu pas de court-circuit entre les éléments 1 du tube, puisque le noyau 10 des joints 9 est en un matériau isolant. Cette suppression de la couche isolante peut se faire facilement, par exemple par fraisage de ces zones.

Il faut noter que si la couche isolante est supprimée dans ces zones, le fluide de refroidissement du tube ne peut plus être simplement de l'eau, car cette dernière provoquerait une corrosion rapide du métal dans ces zones. En s'étendant sous les joints, cette corrosion détruirait l'étanchéité du tube. Dans un tel cas, le fluide de refoidissement doit être un liquide isolant tel que de l'huile pour transformateur.

Il peut également arriver que, au bout d'un certain temps, les forces de compression exercées sur le métal des couches 15 et 16 provoquent un fluage de ce métal. Ce fluage peut conduire à une diminution de l'étanchéité du tube.

Dans la forme d'exécution du tube dont un détail est représenté à la figure 4, cet inconvénient est supprimé. Dans cette forme d'exécution, les faces 5 et 7 des éléments 1 comportent chacune une nervure circulaire 23, respectivement 24. Ces nervures 23 et 24 sont situées dans la zone des faces 5 et 7 qui est en contact avec les couches métalliques 15 et 16, respectivement, lorsque le tube est assemblé. Elles ont une section triangulaire et comportent donc une arête qui pénètre assez profondément dans les couches métalliques 15, respectivement 16, lorsque le joint 9 est serré entre les deux éléments 1. Ces nervures 23 et 24 empêchent l'apparition du phénomène de fluage du métal des couches 15 et 16 mentionné ci-dessus et garantissent donc le maintien d'une bonne étanchéité du tube à longue échéance.

Il est évident que l'invention n'est pas limitée aux formes d'exécution décrites et représentées. Notamment, les moyens de serrage des éléments du tube les uns contre les autres peuvent être disposés et/ou réalisés d'une manière différente de celle qui a été représentée.

Par exemple, les logements 19 qui sont prévus dans la face 5 des éléments 1 peuvent être situés dans la face 7 de ces éléments 1. Les vis 20 sont alors introduites depuis ces faces 7, et non plus depuis les faces 5 comme cela a été représenté à la figure 2. Le montage du tube est alors réalisé de la gauche vers la droite de cette figure 2.

Toujours par exemple, un ou plusieurs éléments 1 intermédiaires, et, bien entendu, les joints 9 correspondants, peuvent être insérés entre deux éléments tels que les éléments 1a et 1b de la figure 2. Ces éléments intermédiaires sont tout à fait semblables aux éléments 1a et 1b, à l'exception des trous filetés 18 qui sont remplacés par des trous lisses ayant le même diamètre que les trous 17. Les vis 20, dont la longueur est bien entendu adaptée à ce cas, serrent alors, ensemble, les éléments 1a et 1b et 1e ou les éléments inter-médiaires.

En outre, les tubes tels que décrits ci-dessus peuvent être également utilisés dans des applications où la cavité qu'ils forment est remplie d'un gaz à une pression supérieure à la pression atmos-phérique.

REVENDICATIONS

1. Tube à décharge gazeuse comportant un premier (1a) et un deuxième élément (1b) comportant chacun une ouverture centrale (3) et une première (5) et une deuxième face (7) sensiblement perpendiculaires à l'axe (4) de ladite ouverture centrale (3), lesdits éléments (1a, 1b) étant disposés de manière que la première face (5) du premier élément (1a) soit située en regard de la deuxième face (7) du deuxième élément (1b) et que lesdites ouvertures centrales (3) soient coaxiales et constituent, ensemble, au moins une partie d'une cavité destinée à contenir un gaz, ledit tube comportant en outre un joint annulaire (9) disposé autour de ladite cavité entre ladite première face (5) du premier élément (1a) et la deuxième face (7) du deuxième élément (1b) pour assurer l'étanchéité de ladite cavité et des moyens pour serrer ledit joint (9) entre ledit premier élément (1a) et ledit deuxième élément (1b), caractérisé par le fait que ledit joint (9) comporte un noyau annulaire (10) réalisé en un matériau imperméable aux gaz, résistant à la compression et à la chaleur et électriquement isolant, une première couche métallique (16) disposée entre ledit noyau (10) et ladite première face (5) du premier élément (1a) et une deuxième couche métallique (15) disposée entre ledit noyau (10) et ladite deuxième face (7) du deuxième élément (16) sans contact électrique l'une avec l'autre, les dimensions dudit noyau (10) et desdites couches métalliques (15, 16) étant choisies de manière que lesdits éléments (1a, 1b) n'aient aucun contact électrique l'un avec l'autre lorsque ledit joint (9) est serré par lesdits moyens de serrage entre lesdits éléments (1a, 1b).

2. Tube selon la revendication 1, caractérisé par le fait que ledit noyau (10) est en céramique.

3. Tube selon la revendication 1, caractérisé par le fait que lesdites première (16) et deuxième couches métalliques (15) sont reliées audit noyau (10) de manière indémontable.

4. Tube selon la revendication 1, caractérisé par le fait que lesdites première (16) et deuxième couches métalliques (15) sont juxtaposées audit noyau (10) et ne forment pas une seule pièce avec lui.

5. Tube selon la revendication 1, caractérisé par le fait que lesdits moyens de serrage comportent au moins un trou fileté (18) disposé parallèlement audit axe (4) dans ledit premier élément (1a), au moins un trou lisse (17) disposé parallèlement audit axe (4) dans ledit deuxième élément (1b) en regard dudit trou fileté (18), une vis (20) retenue dans ledit trou lisse (17) et vissée dans ledit trou fileté (18) de manière à serrer ledit joint (9) entre ledit premier (1a) et ledit deuxième élément (1b), et des moyens (21) pour isoler électriquement ladite vis (20) dudit deuxième élément (16).

6. Tube selon la revendication 1, caractérisé par le fait que lesdits éléments (1a, 1b) comportent en outre chacun une nervure annulaire (23) disposée autour de ladite ouverture centrale sur la partie de ladite première (5), respectivement de ladite deuxième face (7) en contact avec ladite première (16), respectivement ladite deuxième couche métallique (15), ladite nervure comportant une arête destinée à pénétrer dans ladite couche métallique (15, 16) en réponse à la force exercée sur lesdits éléments (1a, 1b) par lesdits moyens de serrage.

7. Tube selon la revendication 1, caractérisé par le fait que lesdits éléments (1a, 1b) comportent chacun une couche électriquement isolante disposée sur toute leur surface à l'exception des zones desdites faces (5, 7) en contact avec ledit joint (9).

Fig.1

Fig.2

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 536 218  (LOCATELLI)<br>* Revendication 1; figure 3 * | 1,5 | H 01 S   3/03 |
| A | US-A-4 486 886  (REAM)<br>* Figure; colonne 3, lignes  7-32 * | 1,5 | |
| A | DE-A-2 401 302  (ETAT FRANCAIS)<br>* Figures 4,5,10,11 * | 1 | |
| D,A | EP-A-0 048 690  (LASAG AG)<br><br>* Revendications  1,3,15; figure 3b * | | |

DOMAINES TECHNIQUES RECHERCHES (Int. Cl.4)

H 01 S   3/03

Le présent rapport de recherche a été établi pour toutes les revendications

| Lieu de la recherche | Date d'achèvement de la recherche | Examinateur |
|---|---|---|
| LA HAYE | 15-12-1986 | FARNESE G.P. |